# FASCICULE DE BREVET EUROPEEN

(11) **EP 4 448 985 B1**
(45) Date de publication et mention de la délivrance du brevet: **23.09.2026**
(21) Numéro de dépôt: 22847546.3
(22) Date de dépôt: 14.12.2022
(51) Int. Cl.: F16H 57/04, F02C 7/36, F16H 57/08

(54) **COLLECTEUR D'HUILE POUR UN RÉDUCTEUR MÉCANIQUE DE TURBOMACHINE**
ÖLVERTEILER FÜR EIN MECHANISCHES UNTERSETZUNGSGETRIEBE EINES TURBINENMOTORS
OIL MANIFOLD FOR A MECHANICAL REDUCTION GEAR OF A TURBINE ENGINE

(30) Priorité: 16.12.2021 FR 2113695
(43) Date de publication de la demande: 23.10.2024
(73) Titulaire: Safran Transmission Systems, 92700 Colombes (FR)
(72) Inventeur: MARCOS IZQUIERDO, Juan-Luis, 77550 MOISSY-CRAMAYEL (FR); PENNACINO, Antoine, Jacques, Marie, 77550 MOISSY-CRAMAYEL (FR)
(74) Mandataire: Ernest Gutmann - Yves Plasseraud S.A.S.
(86) Numéro de dépôt international: PCT/FR2022/052360
(87) Numéro de publication internationale: WO 2023/111459

(56) Documents cités:
- EP-A1- 3 851 653
- US-A1- 2015 065 285
- US-A1- 2016 146 102

## Description

### Domaine technique de l'invention

L'invention concerne un collecteur d'huile pour un réducteur mécanique de turbomachine.

### Etat de la technique antérieure

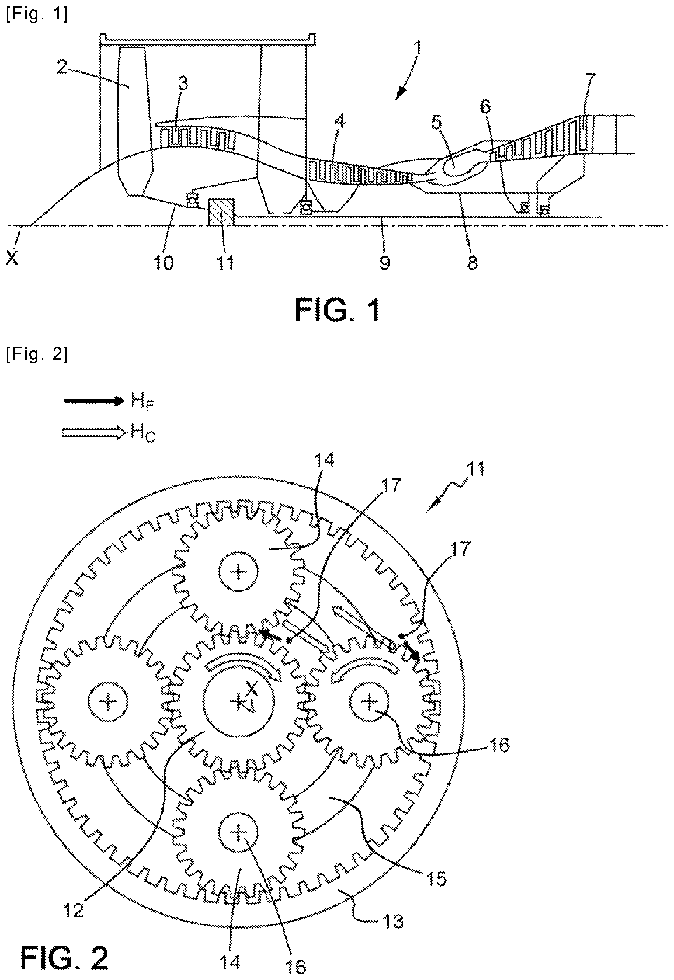

La figure 1 illustre un turboréacteur 1 à double flux de l'art antérieur, d'axe X, comportant d'amont en aval dans le sens de circulation du flux de gaz au sein de la turbomachine, une soufflante 2, un compresseur basse pression 3, un compresseur haute pression 4, une chambre de combustion 5, une turbine haute pression 6 et une turbine basse pression 7. Le flux d'air entrant au niveau de la soufflante est divisé en un flux d'air primaire traversant les compresseurs 3, 4, la chambre de combustion 5 et les turbines 6, 7, et en un flux d'air secondaire s'écoulant à l'extérieur du flux d'air primaire.

Le compresseur haute pression 4 est couplé à la turbine haute pression 6 par l'intermédiaire d'un arbre 8 dit haute pression, l'ensemble formant un corps haute pression. Le compresseur basse pression 3 est couplé à la turbine basse pression 7 par l'intermédiaire d'un arbre 9 dit basse pression, l'ensemble formant un corps basse pression.

La soufflante 2 est entraînée en rotation par un arbre de soufflante 10 couplé à l'arbre basse pression 9, par l'intermédiaire d'un réducteur mécanique 11. Le réducteur 11 permet à la soufflante 2 de tourner à une vitesse plus faible que les autres éléments du corps basse pression, ce qui permet d'améliorer l'efficacité de la turbomachine. Le réducteur 11 doit transmettre la puissance motrice vers la soufflante tout en assurant le rapport de vitesse demandé, en respectant des contraintes d'encombrement et de masse.

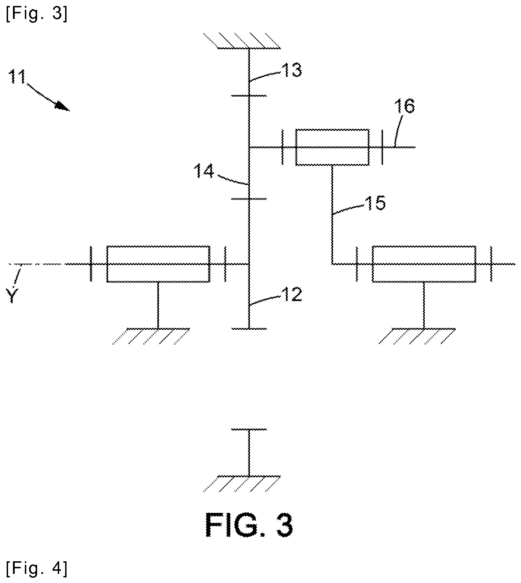

Les figures 2 et 3 illustrent schématiquement la structure générale d'un réducteur mécanique 11. Celui-ci comporte classiquement un solaire 12 (également appelé planétaire interne), une couronne 13 (également appelée planétaire externe), coaxial au solaire 12, des satellites 14 engrenant à la fois avec le solaire 12 et avec la couronne 13, et un porte-satellites 15 comportant des paliers 16 autour desquels les satellites 14 sont montés rotatifs.

Il existe plusieurs architectures de réducteur mécanique 11. Dans l'état de l'art des turbomachines à double flux, les réducteurs sont de type planétaire ou épicycloïdal. Il existe dans d'autres applications similaires, des architectures dites différentielles ou « compound ».

Sur un réducteur épicycloïdal, la couronne 13 est fixe et le porte-satellites 15 constitue l'arbre de sortie du réducteur 11 qui tourne dans le même sens que le solaire 12. Dans une telle configuration, l'ensemble des satellites 14 entraine en rotation le porte-satellite 15 autour de l'axe X de la turbomachine 1. La couronne 13 est fixée au carter moteur ou stator et le porte-satellites 15 est fixé à l'arbre 9 de la soufflante 2.

Sur un réducteur planétaire, le porte-satellites 15 est fixe et la couronne 13 constitue l'arbre de sortie du réducteur 11 qui tourne dans le sens inverse du solaire 12. Dans une telle configuration, l'ensemble des satellites 14 est maintenu par un porte-satellites 15 qui est fixé au carter moteur ou stator. Chaque satellite 14 entraine la couronne 13 qui est rapportée à l'arbre 9 de la soufflante 2.

Sur un réducteur différentiel, aucun élément n'est fixé en rotation. La couronne 13 tourne dans le sens contraire du solaire 12 et du porte-satellites 15.

Les réducteurs mécaniques peuvent être composés d'un ou plusieurs étages d'engrènement. Cet engrènement est assuré de différentes façons comme par contact, par friction ou encore par champs magnétique. Il existe par ailleurs plusieurs types d'engrènement par contact comme avec des dentures droites ou en chevron.

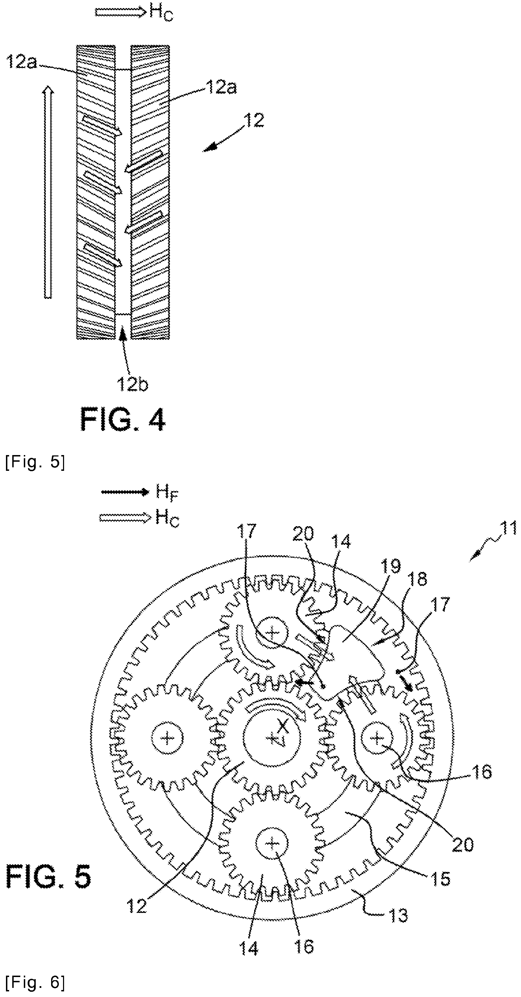

Comme illustré à la figure 4, le solaire 12 et/ou les satellites 14 peuvent comporter chacun deux zones dentées 12a séparées axialement l'une de l'autre par une gorge annulaire 12b.

Un tel réducteur 11 doit être alimenté en huile lors de son fonctionnement afin d'assurer le refroidissement et la lubrification des différents éléments du réducteur 11. Pour cela, le réducteur 11 comporte des moyens de lubrification 17 comprenant notamment des canaux de distribution d'huile (non représentés) afin d'acheminer de l'huile froide H_{F} provenant d'un réservoir d'huile vers les zones d'engrènement du réducteur 11.

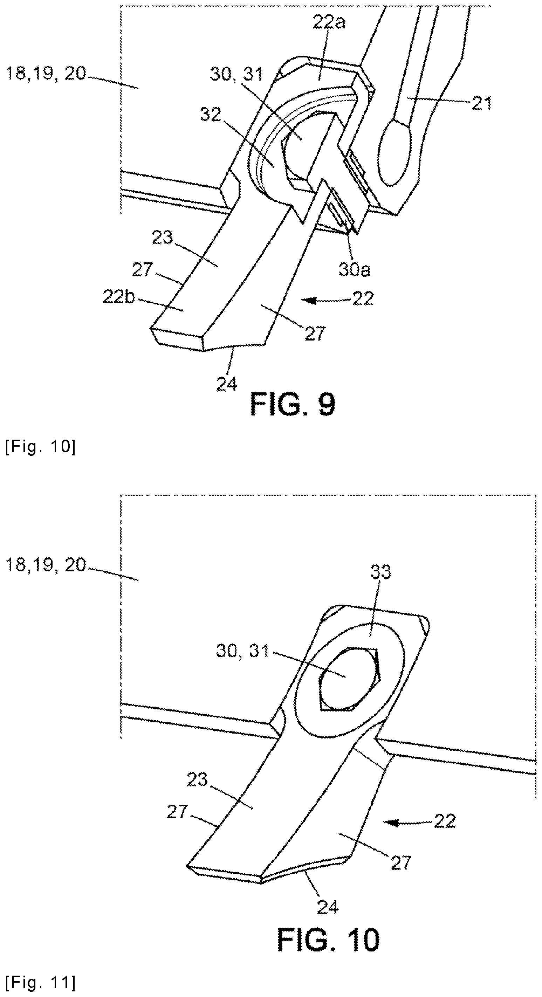

L'huile est échauffée lors du fonctionnement du réducteur 11, l'huile chaude H_{C} pouvant avoir tendance à être dirigée vers une zone interne du réducteur 11, notamment dans la zone délimitée par deux satellites 14 adjacents. Afin d'assurer une bonne évacuation et comme illustré à la figure 5, des collecteurs 18 peuvent être monté dans ces zones. Seul un collecteur 18 est représenté sur cette figure, bien qu'un collecteur 18 puisse être disposé dans chaque espace situé circonférentiellement entre deux satellites 14. Chaque collecteur 18 comporte un corps 19. Le corps 19 est par exemple fixé au porte-satellites 15 et comporte deux surfaces latérales 20 arrondies et concaves positionnées en regard des dentures des satellites adjacents 14 correspondants. Le corps 19 comportant en outre une cavité interne 21 (figure 9) de circulation d'huile reliée fluidiquement à un canal d'évacuation d'huile.

En fonctionnement, il est constaté un phénomène de recirculation ou de stagnation d'huile et de particules au niveau du solaire 12, en particulier dans la gorge 12b, générant une mauvaise évacuation des calories et pouvant engendrer des dégradations ou des pertes de performance.

L'invention vise à remédier à un tel inconvénient, de façon simple, fiable et peu onéreuse.

Le document FR 3 088 978 divulgue un collecteur pour un réducteur mécanique dont les parois latérales concaves comportent des languettes en saillie s'étendant dans les gorges annulaires des satellites circonférentiellement adjacents afin de limiter les phénomènes de recirculation au niveau desdits satellites.

Le document US 2015/065285 A1 divulgue un moteur à turbine à gaz comprenant une architecture à engrenages avec plusieurs engrenages intermédiaires, et un déflecteur avec une écope de récupération d'huile adjacente à chacun des multiples engrenages intermédiaires.

### Présentation de l'invention

Le présent document propose un collecteur d'huile pour un réducteur mécanique de turbomachine, comportant un corps comprenant deux extrémités longitudinales reliées par deux surfaces latérales opposées configurées chacune pour s'étendre en partie autour d'un satellite dudit réducteur, le corps comportant en outre une cavité interne de circulation d'huile, caractérisé en ce que le collecteur comporte au moins une languette montée de façon amovible sur le corps, ladite languette s'étendant depuis le corps à une des deux extrémités longitudinales dans le prolongement d'au moins une surface latérale et la languette étant destinée à être engagée au moins en partie dans une gorge annulaire d'un solaire du réducteur.

Un tel collecteur est ainsi équipé d'une languette apte à limiter les phénomènes de recirculation au niveau de la gorge du solaire, et non au niveau des gorges des satellites, comme cela est le cas dans l'art antérieur. Par ailleurs, le fait que la languette soit amovible facilite, ou dans certains cas rend possible le montage d'un tel collecteur au sein d'un réducteur mécanique. De plus, en cas d'endommagement de la languette, il est possible changer uniquement la languette sans avoir à remplacer le corps du collecteur.

La languette peut présenter une surface de guidage d'huile s'étendant dans le prolongement de la surface latérale correspondante du collecteur.

La surface de guidage d'huile peut être une surface courbe, par exemple concave.

La surface de guidage d'huile peut présenter une continuité de surface et de pente avec la surface latérale correspondante du collecteur, à l'inverse de l'art antérieur présenté précédemment ou la languette est en saillie par rapport à la surface latérale correspondante du collecteur.

La surface latérale du collecteur peut être cylindrique. La surface latérale du collecteur peut présenter un diamètre supérieur au diamètre du satellite adjacent.

La languette peut être fabriquée par fabrication additive ou forgeage par exemple.

La languette peut comporter une surface concave, par exemple en portion de cylindre, destinée à être tournée vers le fond de la gorge du solaire et distincte de la surface de guidage d'huile.

La languette peut être fixée par l'intermédiaire d'une vis sur le corps.

Ladite vis peut coopérer avec un écrou se présentant sous la forme d'un insert monté fixement sur le corps.

L'insert peut être serti ou brasé sur le corps.

En variante, ladite vis peut coopérer avec un taraudage du corps.

La vis comporte une tête logée, par exemple intégralement, dans un évidement, fraisage ou lamage du corps. De cette manière, ladite tête ne gêne pas l'écoulement de l'huile sur la surface correspondante de la languette.

Ledit évidement, fraisage ou lamage du corps peut être rempli, au moins partiellement, par un bouchon comportant une surface s'étendant dans le prolongement ou affleurant une surface de la languette.

Dans le cas d'un lamage, celui-ci peut présenter une forme cylindrique.

Dans le cas d'un fraisage, celui-ci peut présenter une forme conique ou tronconique.

Le bouchon peut être formé par une pièce souple ou rigide, montée dans ledit évidement, fraisage ou lamage.

En variante, ledit bouchon peut être formé par un matériau introduit sous forme de gel, de poudre ou de pâte ou sous forme liquide dans ledit évidement, fraisage ou lamage, ledit matériau étant ensuite durci au moins partiellement. Ledit matériau peut être à base de silicone.

Le collecteur peut comporter une douille anti-dévissement apte à empêcher le dévissement de la vis de de fixation de lala languette. En variante, la fonction anti-dévissement peut être assurée par le bouchon.

La languette peut être symétrique par rapport à un plan médian longitudinal de ladite languette. En variante, ladite languette peut être dissymétrique par rapport audit plan médian longitudinal. L'invention concerne également un réducteur mécanique pour une turbomachine s'étendant selon un axe, comportant un solaire, une couronne, et des satellites engrenant avec le solaire et la couronne, les satellites étant maintenus par un porte-satellites, le solaire comportant deux zones dentées séparées axialement l'une de l'autre par une gorge annulaire, caractérisé en ce qu'il comporte au moins un collecteur du type précité dont le corps est monté circonférentiellement entre deux satellites et radialement entre lesdits satellites et le solaire, la languette étant engagée au moins en partie dans ladite gorge annulaire du solaire.

La languette peut s'étendre sur une portion comprise entre 25 et 90% de la largeur de ladite gorge.

Il est ainsi possible d'adapter la quantité de fluide évacuée de la gorge par la languette en ajustant sa largeur par rapport à la largeur de la gorge. Par ailleurs, la réduction de la largeur de la languette permet également de faciliter son montage ou son démontage.

La gorge peut comporter deux surfaces latérales ou flancs, la languette comportant ses deux surfaces latérales opposées s'étendant respectivement en regard de chacun des flancs de la gorge, un jeu compris entre 0,5 et 5 mm étant formé entre chaque surface latérale de la languette et le flanc correspondant.

Le présent document concerne également un procédé de montage d'un réducteur du type précité, caractérisé en ce qu'il comporte les étapes consistant à :
- monter au moins un corps d'au moins un collecteur sur un support,
- monter le solaire sur ledit support,
- monter la languette sur ledit corps de façon à ce qu'elle s'étende au moins en partie dans la gorge du solaire,
- monter les satellites sur le porte-satellites.

### Brève description des figures

[Fig. 1] est une demie-vue en coupe axiale d'une turbomachine de l'art antérieur,
[Fig. 2] est une vue schématique d'un réducteur mécanique de l'art antérieur,
[Fig. 3] est un diagramme cinématique du réducteur de la figure 2,
[Fig. 4] est une vue de côté du solaire,
[Fig. 5] est une vue correspondant à la figure 2 d'un réducteur mécanique équipé de collecteurs, conformément à l'art antérieur,
[Fig. 6] est une vue en perspective d'une partie d'un réducteur mécanique selon le présent document,
[Fig. 7] est une vue de détail de la languette du réducteur de la figure 6,
[Fig. 8] est une vue de détail d'un réducteur selon une autre forme de réalisation,
[Fig. 9] est une vue en coupe d'une partie d'un réducteur selon le présent document,
[Fig. 10] est une vue de détail illustrant une autre forme de réalisation,
[Fig. 11] est une vue de détail illustrant encore une autre forme de réalisation.

### Description détaillée de l'invention

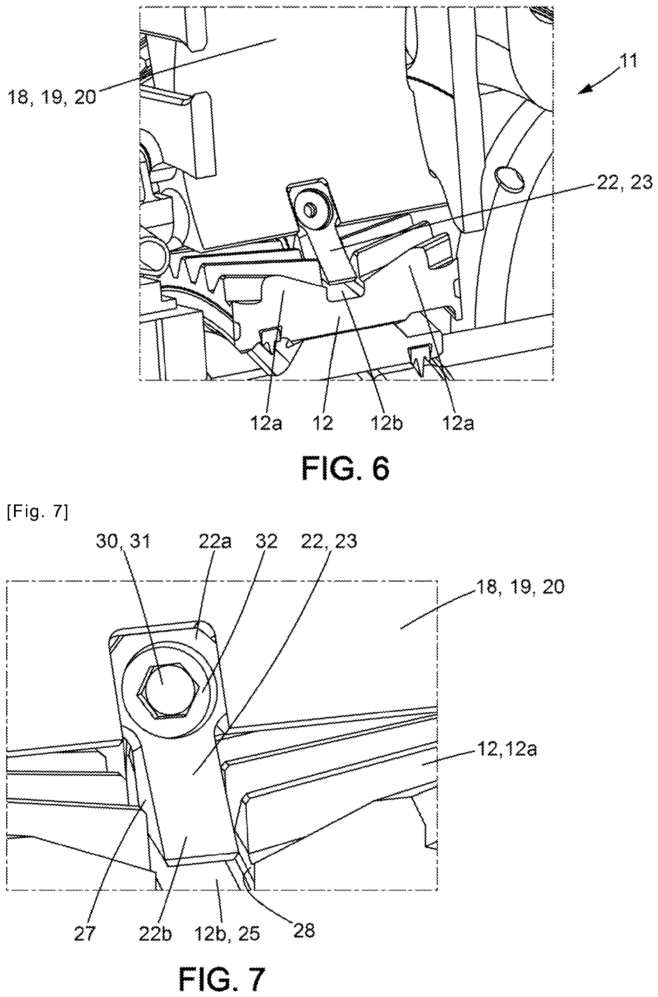

Les figures 6 et 7 illustrent une partie d'un réducteur mécanique 11 selon une forme de réalisation de l'invention. Celui-ci comporte, comme précédemment, un solaire 12, une couronne 13, et des satellites 14 engrenant avec le solaire 12 et la couronne 13, les satellites 14 étant maintenus par un porte-satellites 15. Le solaire 12 comportant deux zones dentées 12a séparées axialement l'une de l'autre par une gorge annulaire 12b. Le réducteur 11 comporte en outre des collecteurs d'huile 18 montés chacun circonférentiellement entre deux satellites 14 et radialement entre lesdits satellites 14 et le solaire 12.

Chaque collecteur d'huile 18 comporte un corps 19 comprenant deux surfaces latérales 20 opposées, de forme concave et en portion de cylindre, configurées chacune pour s'étendre en partie autour d'un satellite 14. Le corps comporte également une cavité interne de circulation d'huile 21 et une languette 22, formée par une pièce distincte du corps 19 et montée de façon amovible sur le corps 19.

La languette 22 présente une forme allongée et s'étend globalement radialement entre une extrémité radialement externe 22a fixée au corps et une extrémité radialement interne 22b engagée dans la gorge.

La languette 22 comporte une surface 23 de guidage d'huile concave courbe, en forme de portion de cylindre, présentant une continuité de surface et de pente avec la surface latérale 20 correspondante du collecteur 18.

L'extrémité radialement interne 22b de la languette 22 comporte une autre surface, à savoir une surface 24 d'extrémité concave courbe en forme de portion de cylindre, s'étendant en regard de la surface de fond cylindrique 25 de la gorge 12. Un jeu 26 peut être formé entre la surface d'extrémité 24 de la languette 22 et la surface de fond 25 de la gorge 12b. Ce jeu 26 peut être compris entre 1 et 5 mm.

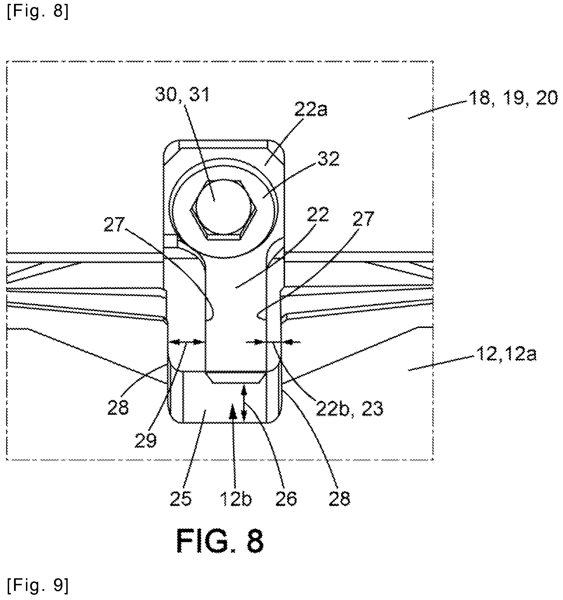

L'extrémité radialement interne de la languette 22 comporte en outre deux surfaces latérales 27 s'étendant respectivement en regard de chacune des surface latérales ou flancs 28 de la gorge 12b du solaire 12, un jeu 29 pouvant être formé entre chaque paire de surfaces 27, 28. Ce jeu 29 peut être compris entre 0,5 et 5 mm. Ce jeu 29 peut être égal (figure 7) ou différent (figure 8) d'une surface latérale 28 à une autre.

La languette peut être symétrique ou asymétrique. En d'autres termes, le jeu 29 peut être égal ou différent d'un côté et de l'autre de l'extrémité 22b.

Le cas d'un jeu 29 différent (figure 8), correspondant à une languette 22 dissymétrique, peut permettre de faciliter encore le montage de la languette 22 dans la gorge 12b, ou son démontage.

La languette 22 est par exemple fixée par l'intermédiaire d'une vis 30 sur le corps 19. Ladite vis 30 peut coopère avec un écrou se présentant sous la forme d'un insert 30a (figure 9) monté fixement sur le corps 19.

L'insert 30a peut être serti ou brasé sur le corps 19.

La vis 30 comporte une tête 31 logée intégralement dans un évidement 32 formé par un lamage du corps 19. Le lamage 32 est de forme cylindrique, dans le cas des figures 7 à 10. Bien entendu, cet évidement 32 peut se présenter sous d'autres formes.

Comme illustré à la figure 10, ledit évidement 32 peut être rempli, au moins partiellement, par un bouchon 33 comportant une surface s'étendant dans le prolongement d'une surface de la languette 22. Le bouchon 33 peut être formé par une pièce souple ou rigide, montée dans ledit évidement 32. En variante, ledit bouchon 33 peut être formé par un matériau introduit sous forme de gel, de poudre ou de pâte ou sous forme liquide dans ledit évidement 32, ledit matériau étant ensuite durci au moins partiellement. Ledit matériau peut être à base de silicone.

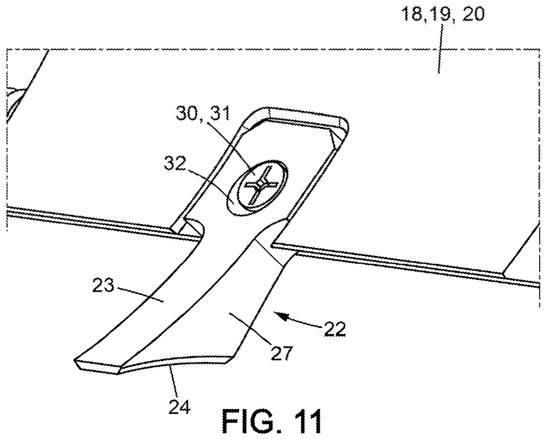

La figure 11 illustre le cas où l'évidement 32 est un fraisage de forme tronconique, la tête 31 de la vis 30 étant de forme complémentaire.

Un tel collecteur 18, équipé d'une languette 22, permet de limiter efficacement les phénomènes de recirculation au niveau de la gorge 12b du solaire 12. Par ailleurs, le fait que la languette 22 soit amovible facilite, ou dans certains cas rend possible le montage d'un tel collecteur 18 au sein d'un réducteur mécanique 11.

Un tel montage peut être réalisé en montant successivement le corps 19 de chaque collecteur 18 sur un support, en montant le solaire 12, puis en montant la languette 22 sur chaque corps 19 de façon à ce qu'elle s'étende au moins en partie dans la gorge du solaire, et enfin en montant les satellites 14 sur le porte-satellites 15.

En cas d'endommagement de la languette 22, il est possible de changer uniquement la languette 22 sans avoir à remplacer le corps 19 du collecteur 18.

## Revendications

1. Collecteur d'huile (18) pour un réducteur (11) mécanique de turbomachine, comportant un corps (19) comprenant deux extrémités longitudinales reliées par deux surfaces latérales (20) opposées configurées chacune pour s'étendre autour d'un satellite (14) dudit réducteur (11), le corps (19) comportant en outre une cavité interne (21) de circulation d'huile, **caractérisé en ce que** le collecteur (18) comporte au moins une languette (22) montée de façon amovible sur le corps (19), ladite languette (22) s'étendant depuis le corps (19) à une des deux extrémités longitudinales dans le prolongement d'au moins une surface latérale (20) et la languette (22) étant destinée à être engagée au moins en partie dans une gorge annulaire (12b) d'un solaire (12) du réducteur (11).

2. Collecteur (18) selon la revendication précédente, **caractérisé en ce que** la languette (22) est fixée par l'intermédiaire d'une vis (30) sur le corps (19).

3. Collecteur (18) selon la revendication précédente, **caractérisé en ce que** ladite vis (30) coopère avec un écrou se présentant sous la forme d'un insert (30a) monté fixement sur le corps (19).

4. Collecteur (18) selon la revendication 2 ou 3, **caractérisé en ce que** la vis comporte une tête (31) logée dans un évidement (32), fraisage ou lamage du corps (19).

5. Collecteur (18) selon la revendication précédente, **caractérisé en ce que** ledit évidement (32), fraisage ou lamage du corps (19) est rempli, au moins partiellement, par un bouchon (33) comportant une surface qui affleure une surface (23) de la languette (22).

6. Collecteur (18) selon l'une des revendications précédente, **caractérisé en ce que** ladite languette (22) est symétrique par rapport à un plan médian longitudinal de ladite languette (22).

7. Réducteur (11) mécanique pour une turbomachine s'étendant selon un axe (X), comportant un solaire (12), une couronne (13), et des satellites (14) engrenant avec le solaire (12) et la couronne (13), les satellites (14) étant maintenus par un porte-satellites (14), le solaire (12) comportant deux zones dentées (12a) séparées axialement l'une de l'autre par une gorge annulaire (12b), **caractérisé en ce qu'**il comporte au moins un collecteur (18) selon l'une des revendications précédentes dont le corps (19) est monté circonférentiellement entre deux satellites (14) et radialement entre lesdits satellites (14) et le solaire (12), la languette (22) étant engagée au moins en partie dans ladite gorge annulaire (12b) du solaire (12).

8. Réducteur (11) selon l'une des revendications précédentes, **caractérisé en ce que** la languette (22) s'étend sur une portion comprise entre 25 et 90% de la largeur de ladite gorge (12b).

9. Réducteur (11) selon la revendication précédente, **caractérisé en ce que** la gorge (12b) comporte deux flancs (28), la languette (22) comportant ses deux surfaces latérales (27) opposées s'étendant respectivement en regard de chacun des flancs (28) de la gorge (12b), un jeu (29) compris entre 0,5 et 5 mm étant formé entre chaque surface latérale (27) de la languette (22) et le flanc (28) correspondant.

10. Procédé de montage d'un réducteur (11) selon l'une des revendications 6 ou 7, **caractérisé en ce qu'**il comporte les étapes consistant à :
- monter au moins un corps (19) d'au moins un collecteur (18) sur un support,
- monter le solaire (12) sur ledit support,
- monter la languette (22) sur ledit corps (19) de façon à ce qu'elle s'étende au moins en partie dans la gorge (12b) du solaire (12),
- monter les satellites (14) sur le porte-satellites (14).

## Patentansprüche

1. Ölverteiler (18) für ein mechanisches Untersetzungsgetriebe (11) eines Turbotriebwerks, umfassend ein Gehäuse (19) mit zwei Längsenden, die durch zwei gegenüberliegende Seitenflächen (20) verbunden sind, die jeweils so ausgebildet sind, dass sie sich um einen Planetenrad (14) des Untersetzungsgetriebes (11) erstrecken, wobei das Gehäuse (19) ferner einen inneren Hohlraum (21) zur Ölzirkulation aufweist,
**dadurch gekennzeichnet, dass** der Verteiler (18) zumindest eine Lasche (22) aufweist, die abnehmbar an dem Gehäuse (19) angebracht ist, wobei sich die Lasche (22) ausgehend von dem Gehäuse (19) an einem der beiden Längsenden in Verlängerung zumindest einer Seitenfläche (20) erstreckt und die Lasche (22) dazu bestimmt ist, zumindest teilweise in eine ringförmige Nut (12b) eines Sonnenrads (12) des Untersetzungsgetriebes (11) einzugreifen.

2. Verteiler (18) nach dem vorstehenden Anspruch,
**dadurch gekennzeichnet, dass** die Lasche (22) mittels einer Schraube (30) an dem Gehäuse (19) befestigt ist.

3. Verteiler (18) nach dem vorstehenden Anspruch,
**dadurch gekennzeichnet, dass** die genannte Schraube (30) mit einer Mutter zusammenwirkt, die in Form eines fest an dem Gehäuse (19) angebrachten Einsatzes (30a) vorliegt.

4. Verteiler (18) nach Anspruch 2 oder 3,
**dadurch gekennzeichnet, dass** die Schraube einen Schraubenkopf (31) aufweist, der in einer Aussparung (32), Ausfräsung oder Senkung des Gehäuses (19) einsitzt.

5. Verteiler (18) nach dem vorstehenden Anspruch,
**dadurch gekennzeichnet, dass** die genannte Aussparung (32), Ausfräsung oder Senkung des Gehäuses (19) zumindest teilweise durch einen Stopfen (33) ausgefüllt ist, der eine Fläche aufweist, die bündig mit einer Fläche (23) der Lasche (22) abschließt.

6. Verteiler (18) nach einem der vorstehenden Ansprüche,
**dadurch gekennzeichnet, dass** die Lasche (22) symmetrisch zu einer Längsmittelebene der Lasche (22) verläuft.

7. Mechanisches Untersetzungsgetriebe (11) für ein Turbotriebwerk, das sich entlang einer Achse (X) erstreckt, umfassend ein Sonnenrad (12), ein Hohlrad (13) und Planetenräder (14), die mit dem Sonnenrad (12) und dem Hohlrad (13) kämmen, wobei die Planetenräder (14) von einem Planetenradträger (14) gehalten werden, wobei das Sonnenrad (12) zwei Verzahnungsbereiche (12a) aufweist, die durch eine ringförmige Nut (12b) axial voneinander getrennt sind,
**dadurch gekennzeichnet, dass** es zumindest einen Verteiler (18) nach einem der vorstehenden Ansprüche aufweist, dessen Gehäuse (19) in Umfangsrichtung zwischen zwei Planetenrädern (14) und in radialer Richtung zwischen den genannten Planetenrädern (14) und dem Sonnenrad (12) angeordnet ist, wobei die Lasche (22) zumindest teilweise in die genannte ringförmige Nut (12b) des Sonnenrads (12) eingreift.

8. Untersetzungsgetriebe (11) nach einem der vorstehenden Ansprüche,
**dadurch gekennzeichnet, dass** sich die Lasche (22) über einen Abschnitt erstreckt, der zwischen 25 und 90 % der Breite der genannten Nut (12b) beträgt.

9. Untersetzungsgetriebe (11) nach dem vorstehenden Anspruch,
**dadurch gekennzeichnet, dass** die Nut (12b) zwei Flanken (28) aufweist, wobei die Lasche (22) mit ihren beiden gegenüberliegenden Seitenflächen (27) jeweils gegenüber einer der Flanken (28) der Nut (12b) verläuft, wobei zwischen jeder Seitenfläche (27) der Lasche (22) und der entsprechenden Flanke (28) ein Spiel (29) von 0,5 bis 5 mm besteht.

10. Verfahren zum Einbau eines Untersetzungsgetriebes (11) nach einem der Ansprüche 6 oder 7,
**dadurch gekennzeichnet, dass** es die folgenden Schritte umfasst:
- Anbringen zumindest eines Gehäuses (19) zumindest eines Verteilers (18) an eine Halterung,
- Anbringen des Sonnenrads (12) an die genannten Halterung,
- Anbringen der Lasche (22) an das genannte Gehäuse (19) derart, dass sie sich zumindest teilweise in die Nut (12b) des Sonnenrads (12) erstreckt,
- Anbringen der Planetenräder (14) an den Planetenradträger (14).

## Claims

1. Oil collector (18) for a mechanical reduction gear (11) of a turbomachine, comprising a body (19) comprising two longitudinal ends connected by two opposing side surfaces (20) each configured to extend around a planet (14) of said reduction gear (11), the body (19) further comprising an internal cavity (21) for oil circulation, **characterized in that** the collector (18) comprises at least one tongue (22) removably mounted on the body (19), said tongue (22) extending from the body (19), at one of the two longitudinal ends, in the extension of at least one side surface (20) and the tongue (22) intended to be at least partially engaged in an annular groove (12b) of a sun gear (12) of the reduction gear (11).

2. Collector (18) according to the preceding claim, wherein the tongue (22) is fixed to the body (19) by means of a screw (30).

3. Collector (18) according to the preceding claim, wherein said screw (30) engages with a nut provided in the form of an insert (30a) fixedly mounted on the body (19).

4. Collector (18) according to claim 2 or 3, wherein the screw comprises a head (31) housed in a recess (32), milling, or countersink hole in the body (19).

5. Collector (18) according to the preceding claim, wherein said recess (32), milling, or countersink hole in the body (19) is at least partially filled by a plug (33) comprising a surface which is flush with a surface (23) of the tongue (22).

6. Collector (18) according to one of the preceding claims, wherein said tongue (22) is symmetrical relative to a longitudinal midplane of said tongue (22).

7. Mechanical reduction gear (11) for a turbomachine extending along an axis (X), comprising a sun gear (12), a ring gear (13), and planets (14) meshing with the sun gear (12) and ring gear (13), the planets (14) being held by a planet carrier (14), the sun gear (12) comprising two toothed areas (12a) which are axially separated from one another by an annular groove (12b), **characterized in that** it comprises at least one collector (18) according to one of the preceding claims of which the body (19) is mounted circumferentially between two planets (14) and radially between said planets (14) and the sun gear (12), the tongue (22) being at least partially engaged in said annular groove (12b) of the sun gear (12).

8. Reduction gear (11) according to one of the preceding claims, wherein the tongue (22) extends over a portion that is between 25 and 90% of the width of said groove (12b).

9. Reduction gear (11) according to the preceding claim, wherein the groove (12b) has two flanks (28), the tongue (22) comprising its two opposing side surfaces (27) extending respectively facing each of the flanks (28) of the groove (12b), a clearance (29) of between 0.5 and 5 mm being formed between each side surface (27) of the tongue (22) and the corresponding flank (28).

10. Method for assembling a reduction gear (11) according to one of claims 6 or 7, **characterized in that** it comprises the steps of:
- mounting at least one body (19) of at least one collector (18) on a support,
- mounting the sun gear (12) on said support,
- mounting the tongue (22) on said body (19) so that it extends at least partially into the groove (12b) of the sun gear (12),
- mounting the planets (14) on the planet carrier (14).
